# EUROPEAN PATENT SPECIFICATION

(11) **EP 3 000 632 B1**
(45) Date of publication and mention of the grant of the patent: **12.08.2020**
(21) Application number: 15186330.5
(22) Date of filing: 22.09.2015
(51) Int. Cl.: B60H 1/00, B60R 13/08, F16L 5/10, F16L 5/14

(54) **VEHICLE AIR-CONDITIONING-SYSTEM-MODULE SEAL AND ASSEMBLY WITH A VEHICLE AIR-CONDITIONING-SYSTEM-MODULE SEAL**
FAHRZEUGKLIMAANLAGENMODULDICHTUNG UND ANORDNUNG MIT EINER FAHRZEUGKLIMAANLAGENMODULDICHTUNG
JOINT D'ÉTANCHÉITÉ DE MODULE DE SYSTÈME DE CLIMATISATION DE VÉHICULE ET ENSEMBLE DE JOINT D'ÉTANCHÉITÉ DE MODULE DE SYSTÈME DE CLIMATISATION DE VÉHICULE

(30) Priority: 25.09.2014 DE 102014113924
(43) Date of publication of application: 30.03.2016
(73) Proprietor: Valeo Klimasysteme GmbH, 96476 Bad Rodach (DE)
(72) Inventor: WEBER, Jens, 96515 SONNEBERG (DE); KRÄMER, Stefan, 96126 MAROLDSWEISACH (DE)
(74) Representative: Tran, Chi-Hai

(56) References cited:
- EP-A1- 0 659 600
- WO-A1-2011/096225
- FR-A1- 2 941 518
- JP-A- H11 263 118

## Description

The invention relates to an air-conditioning-system-module seal which seals off a module of a vehicle air-conditioning system in relation to an opening in an end wall of the vehicle between an engine compartment and the vehicle interior. The invention also relates to an assembly with a vehicle air-conditioning-system-module seal.

Seals of this type are used in order to protect the feed-through of fluid lines between the air-conditioning-system module in the vehicle interior, which module comprises the evaporator, and other modules of the vehicle air-conditioning system in the engine compartment, which modules contain, inter alia, the compressor, against the penetration of moisture from the engine compartment.

Document EP0659600A1 discloses a vehicle air-conditioning-system-module seal which is arranged on an opening in an end wall between an engine compartment of the vehicle and the vehicle interior.

It is the object of the invention to optimize the feed-through of fluid lines through the end wall.

For this purpose, the invention provides a vehicle air-conditioning-system-module seal according to claim 1 which is arranged on an opening in an end wall between an engine compartment of the vehicle and the vehicle interior. The vehicle air-conditioning-system-module seal has at least one feed-through for a fluid line and an elastic sealing element with a circumferential wall portion, which is designed in such a manner that it can be arranged between the fluid line and a housing of the vehicle air-conditioning-system module, and with a flange-like end wall portion which encircles annularly around the circumferential portion and is designed in such a manner that it can bear against the end wall and can seal off the housing in relation to the opening in the end wall. The vehicle air-conditioning-system-module seal (also called "seal" for short below), in addition to sealing, also supplies the elastic element for vibration decoupling between the housing of the vehicle air-conditioning-system module and the end wall and preferably also in relation to the fluid lines. In addition, the design of the seal is simplified here since said functions can be carried out with only a single elastic sealing element.

The end wall portion is realised, for example, by means of a sealing lip which bears flat against the end wall and which, in particular, does not project into the end wall opening. It is possible to provide a plurality of concentric sealing lips in the end wall portion in order to improve the sealing and the vibration decoupling.

The circumferential wall portion preferably lies in the radial direction with respect to the fluid line between the fluid line and the housing and, in addition to gastight and/or liquid tight sealing, also brings about vibration decoupling between the housing and the fluid line.

The elastic sealing element is advantageously formed in one piece in order to reduce the number of required components as far as possible. The elastic sealing element can be produced, for example, from a suitable elastomer in an injection-moulding process.

The circumferential wall portion can have ribs which protrude on the inside and/or outside and serve in particular for vibration decoupling between housing and fluid line. The ribs can be designed as longitudinal ribs or as transverse ribs, wherein it is favourable to provide a plurality of ribs arranged in parallel.

The elastic sealing element preferably has a feed-through portion with at least one feed-through opening for the fluid line. In the mounted state, the feed-through portion bears against the fluid line in order to seal off the feed-through.

The feed-through portion can comprise, for example, a sealing lip which encircles around the feed-through opening for the fluid line and engages in a circumferential groove in a flange of the fluid line. Good mechanical coupling and a secure sealing effect can thus be achieved.

The feed-through portion can directly adjoin the circumferential wall portion or can be arranged spaced apart axially and/or radially therefrom and can be located on that side of the circumferential portion which faces the end wall or on that side of the circumferential portion which faces away from the end wall.

In one variant, the feed-through portion bears against the flange of the fluid line. In another variant, said feed-through portion bears against the fluid line itself at a distance from the flange.

According to the invention, an intermediate body which, in the mounted state, is arranged between the fluid line and the housing is provided.

The intermediate body is preferably a component composed of a rigid material.

The use of such an intermediate body facilitates the absorption in the seal of torsional forces which are produced when screwing down the fluid line, for example in the housing. In particular, in the case of the use of R744 as refrigerating agent, in which a higher pressure prevails in the fluid lines than in the case of conventional refrigerating agents, higher torsional forces accordingly also occur when the flange connections are tightened. Said torsional forces can be introduced into the intermediate body and passed on via the latter to the housing of the air-conditioning system.

The intermediate body can have a feed-through for the fluid line, wherein, for easier installation, the intermediate body comprises, for example, two half-shell-like parts which can be fitted together around the fluid line such that they engage around the fluid line.

It is possible to place the intermediate body between the fluid line itself and the housing or else between a flange of the fluid line and the housing.

In embodiments not belonging to the invention, the intermediate body can be arranged radially within the circumferential wall portion, i.e., for example, between the fluid line and the circumferential wall portion, and can be directly adjacent to the fluid line or to the flange of the fluid line and can bear thereagainst. The circumferential wall portion can be configured in particular to be cup-shaped. In the case of a multi-part intermediate body, the intermediate body parts can then be held together by the circumferential wall portion, which simplifies the installation.

It is according to the invention to arrange the intermediate body radially outside the circumferential wall portion, i.e. between the housing and the circumferential wall portion. The intermediate body then lies on the outside around the circumferential wall portion, and, via the intermediate body, a clamping effect is produced which acts from the edge of the housing opening onto the fluid line or the flange of the fluid line. A distance between the inside of the housing and the outside of the seal can thereby be compensated for by the intermediate body being matched to the gap dimensions. This can be favourable if fluid lines of different diameter or different flange shapes and diameter are intended to be used with housings having a consistent housing diameter.

According to the invention, in the case of an assembly according to claim 7 with a vehicle air-conditioning-system-module seal, a housing of a vehicle air-conditioning-system module and a fluid line passing through the vehicle air-conditioning-system-module seal, the housing of the vehicle air-conditioning-system module is arranged on an opening in the end wall between the engine compartment of the vehicle and the vehicle interior. The seal has an elastic sealing element which has an end wall portion, which bears against the end wall, and a circumferential wall portion, which is arranged between the fluid line and the housing, and at least one feed-through opening for the fluid line. The end wall portion and the circumferential wall portion seal off the housing of the vehicle air-conditioning-system module in relation to the opening in the end wall. In addition, the end wall portion brings about vibration decoupling between the housing and the end wall, and the circumferential wall portion brings about vibration decoupling between the housing and the fluid line. The seal therefore at the same time provides gastight or liquid tight sealing of the housing in relation to the end wall and prevents vibrations from being transmitted between the end wall and the housing and between the fluid lines and the housing.

According to the invention, the seal comprises an intermediate body which has a means for securing against rotation for the fluid line, wherein a seal-side structure is provided which interacts with a line-side structure in order to limit a rotation of the fluid line in relation to the seal. As already described above the intermediate body is preferably a rigid body which can be of multi-part design and which engages around the fluid line, wherein torsional forces are conducted away into the housing via the intermediate body. The maximum angle of rotation is preferably limited to a value which is smaller than approximately 0.1° to 3°.

The seal-side structure can comprise at least one stop point and the line-side structure can comprise at least one stop surface which comes into contact with the stop point at least when the fluid line rotates in relation to the seal. For example, a flange at the end of the fluid line is provided with a noncircular shape, for example a polygonal, in particular rectangular, outer contour, and therefore, during rotation, even after a relatively small angle of rotation, the flange can bear fixedly against one of the stop points. The stop points can be designed, for example, as a projection on the intermediate body or else can lie in stop surfaces on the intermediate body.

The stop surface and the stop points are preferably in form-fitting engagement from the outset in order to keep the maximum angle of rotation as small as possible. However, slight distances between stop point and stop surface are possible because of manufacturing tolerances.

In a second possible embodiment, the seal-side structure comprises a blind hole and the line-side structure comprises a fixing pin which engages in the blind hole. The blind hole is formed in the intermediate body, and the fixing pin is preferably formed on a flange of the fluid line. A form-fitting connection between the fixing pin and the blind hole is also aimed at in this case, but there may be small gaps because of manufacturing tolerances. In this embodiment too, the maximum angle of rotation can be limited, however, to a value of smaller than 0.1° to 3°.

It is possible to design the fixing pin as an extension of a positioning pin on the flange of the fluid line, wherein the positioning pin is customarily provided for protecting feed and return lines of the refrigerating agent against erroneous installation.

In a further preferred embodiment, the feed-through opening in the elastic sealing element is of slot-shaped design and is surrounded by the circumferential wall portion. The circumferential wall portion has first portions which run in the region of the fluid lines and second portions which lie opposite one another and bear against one another in order to close the slot in the elastic sealing element.

In order to be able to introduce the seal into the opening of the housing in a simple manner, the housing in this embodiment is preferably of multi-part design. However, a multi-part housing can also be used in the other embodiments.

The two housing halves can be fixed to each other in the region of the second portions of the circumferential wall portion and can exert a clamping force on the circumferential wall portion in order to prevent liquid from penetrating through the feed-through opening.

The seal can combine all of the sealing functions in the elastic sealing element thereof, namely the sealing of the module housing in relation to the end wall and the sealing of the feed-through of the fluid lines. In addition, the elastic sealing element brings about vibration decoupling from the end wall with respect to the housing and from the housing with respect to the fluid lines. An installation aid for tightening the fluid lines can additionally be provided via the means for securing against rotation.

The invention is described in more detail below using a plurality of exemplary embodiments and with reference to the attached drawings. In the drawings:
- Figure 1 shows a schematic sectional view of a comparative assembly a first embodiment of a vehicle air-conditioning-system-module seal according to the invention;
- Figure 2 shows the seal from Figure 1 with an inserted flange of a fluid line in a schematic top view;
- Figure 3 shows a schematic sectional view of an assembly according to the invention with a second embodiment of a vehicle air-conditioning-system-module seal according to the invention;
- Figure 4 shows a schematic, perspective, partially sectioned view of an assembly with a third embodiment of a vehicle air-conditioning-system-module seal
- Figure 5 shows a schematic sectional view of the assembly according to the invention from Figure 4;
- Figure 6 shows a schematic top view of the vehicle air-conditioning-system-module seal from Figure 5 with two inserted flanges of a fluid line in a first variant;
- Figure 7 shows a schematic top view of the vehicle air-conditioning-system-module seal from Figure 5 with one inserted flange of a fluid line in a second variant;
- Figure 8 shows a schematic sectional view of an elastic element of a vehicle air-conditioning-system-module seal
- Figure 9 shows a schematic illustration of the installation of a vehicle air-conditioning-system-module seal
- Figure 10 shows a schematic sectional view of an assembly according to the invention with a fourth embodiment of a vehicle air-conditioning-system-module seal
- Figure 11 shows a schematic sectional view of a fifth embodiment of an assembly and
- Figure 12 shows a schematic rear view of the assembly from Figure 11, as viewed for the line XII-XII in Figure 11.

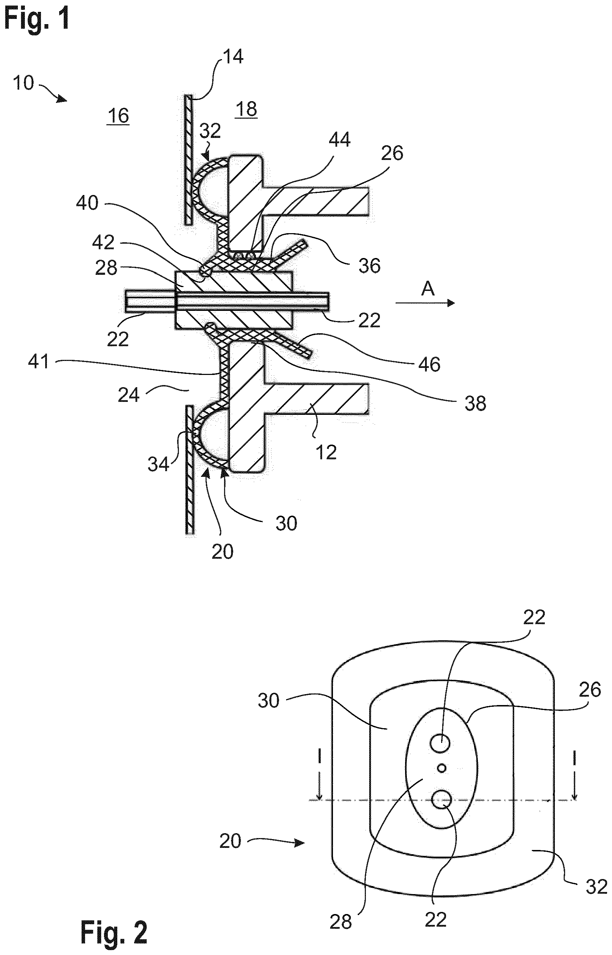

Figure 1 shows an assembly 10, with a vehicle air-conditioning-system module, of which only sections of the housing 12, which is arranged on an end wall 14 of a vehicle between an engine compartment 16 and a vehicle interior 18, are illustrated here. The housing 12 accommodates, for example, an evaporator (not illustrated). The housing 12 is generally composed of a rigid plastics material.

A vehicle air-conditioning-system-module seal 20 (also called "seal 20" for short below) is provided between the housing 12 and the end wall 14. The seal 20 prevents water and moisture from the engine compartment from penetrating the vehicle interior and into the interior of the housing 12.

One or more fluid lines 22 run through an opening 24 in the end wall 14 and through a feed-through opening 26 in the seal 20 to the vehicle air-conditioning-system module and are connected in the engine compartment 16 to other components, comprising, inter alia, a compressor, of the vehicle air-conditioning system.

In this example, a flange 28 is provided on the fluid line 22 in the region of the seal 20, which flange is fixedly connected to the fluid line 22 and surrounds the latter circumferentially and via which the fluid line 22 is connected to an adjoining fluid line 22.

The seal 20 is mounted on the flange 28.

The seal 20 has an elastic sealing element 30 which is manufactured here as a single-piece body composed of a suitable elastomer.

The elastic sealing element 30 has a flange-like end wall portion 32, here in the form of a single troughshaped sealing lip 34 which encircles circumferentially around the feed-through opening 26 and bears in a sheet-like manner against the end wall 14 radially outwards from the opening 24.

The end wall portion 32 seals off the housing 12 in relation to the end wall 14 in a airtight and liquid tight manner. At the same time, it brings about vibration decoupling between the housing 12 and the end wall 14.

The seal 20 does not engage here in the opening 24 but rather lies entirely on the vehicle interior side of the end wall 14.

In addition, the elastic sealing element 30 has a, for example, cylindrical circumferential wall portion 36 which surrounds the fluid line 22, here in particular the flange 28 of the fluid line 22. The circumferential wall portion 36 lies radially within the end wall portion 32 which annularly surrounds the circumferential wall portion 36. In this embodiment, the circumferential wall portion 36 is arranged between the housing 12, here the inner edge of a housing opening 38, and the fluid line 22, here the outside of the flange 28, and therefore said circumferential wall portion is in direct contact with the housing 12 and with the flange 28.

Furthermore, a feed-through portion 40 which here circumferentially surrounds the flange 28 and seals off the feed-through is formed on the elastic sealing element 30. An encircling groove 42 in which an inwardly protruding sealing lip of the feed-through portion 40 engages in a form-fitting manner is formed here in the flange 28.

In the embodiment according to Figure 1, the feed-through portion 40 lies on the end wall side of the circumferential wall portion 36 as an axial extension of the circumferential wall portion 36.

The end wall portion 32 and the feed-through portion 40 are connected here by a radially running wall 41 of the elastic sealing element 30, which wall extends parallel to the end wall 14.

The diameter of the opening 38 in the housing 12, and of the flange 28 on the fluid line 22 and the thickness of the circumferential wall portion 36 are coordinated with one another in such a manner that the flange 28 is clamped with an adequate clamping force in the opening 38 in the housing 12.

Together with the feed-through portion 40, the circumferential wall portion 36 seals off the fluid line 22, here at the flange 28, in relation to the inside of the opening 38 in the housing 12 in a gastight and liquid tight manner.

Ribs 44 which bring about sound insulation and vibration decoupling of the housing 12 and of the fluid line 22 are provided on the circumferential wall portion 36 for vibration damping. In this example, the ribs 44 are designed as encircling transverse ribs on the outer wall of the circumferential wall portion 34 and bear against the inner wall of the opening 38 in the housing 12. The ribs 44 are illustrated only in the upper half, but extend around in a self-contained manner.

That end of the elastic sealing element 30 which is directed away from the end wall 14 has a funnel-shaped portion 46 which opens away from the fluid line 22 and which permits simple installation of the elastic sealing element 30 on the fluid line 22 at the flange 28.

In the example shown here, the flange 28 is designed in such a manner that it has feed-throughs for two fluid lines 22 and, overall, a noncircular, here oval shape. Of course, it would also be possible to provide only a single fluid line 22 on the flange 28. Accordingly, the opening 38 in the housing 12 has a somewhat larger, likewise oval shape matched to the shape of the flange 28.

During installation of the fluid lines 22, in particular during tightening of the flange connections, the flange 28 therefore cannot rotate in relation to the seal 20 and the housing 12, and torsional forces are introduced into the housing 12 and into the end wall 14. It is therefore possible to screw down the fluid lines 22 with the high torsional forces which are required and which are necessary in order to ensure the tightness of the fluid system for use of the refrigerating agent R744.

All of the features of the individual embodiments can also be used individually or in other combinations than illustrated here at the discretion of a person skilled in the art.

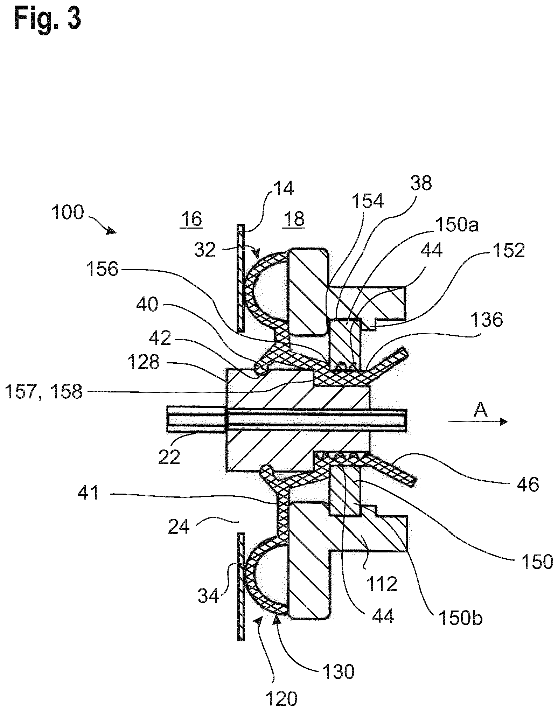

Figure 3 shows an embodiment according to the invention of an assembly 100. Components which are identical or are only slightly changed in relation to the first embodiment keep their already introduced reference numbers for clarity reasons.

In this case, the opening 38 in the housing 112 is formed with a diameter of such a size that a gap is formed between the circumferential wall portion 136 and the inner edge of the opening 38. Said gap is filled by an intermediate body 150 composed of a rigid material, the shape and size of which is selected in such a manner that the desired clamping effect between the housing 112, the circumferential wall portion 136 of the seal 120 and the flange 128 on the fluid line 22 is provided. The rigid intermediate body 150 is placed radially between the circumferential wall portion 136 and the inner edge of the opening 38.

The intermediate body 150 is composed here of two separate, half-shell-like parts 150a, 150b which together engage around the circumferential wall portion 136. The two parts 150a, 150b can be fastened to each other by means of a clip connection or by a screw connection.

As in the embodiment just described, the seal 120 has an end wall portion 32 which bears in a sheet-like manner with an encircling sealing lip 34 against the end wall 14. The feed-through portion 40 is also of substantially identical construction, with an encircling sealing lip which engages in a groove 42 in the flange 128. The circumferential wall portion 136 surrounds the flange 128 and bears against the latter.

Ribs 44 are formed in the circumferential wall portion 136 for vibration decoupling, wherein ribs 44 directed radially outwards towards the intermediate body 150 are shown in the upper half of Figure 3 and ribs 44 directed radially inwards towards the flange 128 are shown in the lower half of Figure 3. All of the ribs 44 are shown here as transverse ribs, but they could also be designed as longitudinal ribs.

The circumferential wall portion 136, the flange 128 and the housing 112 are of partially stepped design in the axial direction A in order to improve the support of the elastic sealing element 130 of the seal 120. In particular, on that side of the intermediate body 150 which faces away from the end wall 14, a radially inwardly directed projection 152 which is in contact with the intermediate body 150 is formed on the housing 112. On that side of the intermediate body 150 which is directed towards the end wall 14, said intermediate body bears against a radially inwardly directed shoulder 154 on the housing 112 and against a radially outwardly facing shoulder 156 of the circumferential wall portion 136.

A short distance in the axial direction A in relation to the shoulder 156 and offset with respect to the end wall 14, a further shoulder 157 is formed on the circumferential wall portion 136, said further shoulder bearing against a radially outwardly directed shoulder 158 in the flange 128. The flange 128, the seal 120, the intermediate body 150 and the housing 112 are thereby secured on one another in the axial direction A.

As in the first embodiment, the flange 128 can have two fluid lines 22 or just a single fluid line 22.

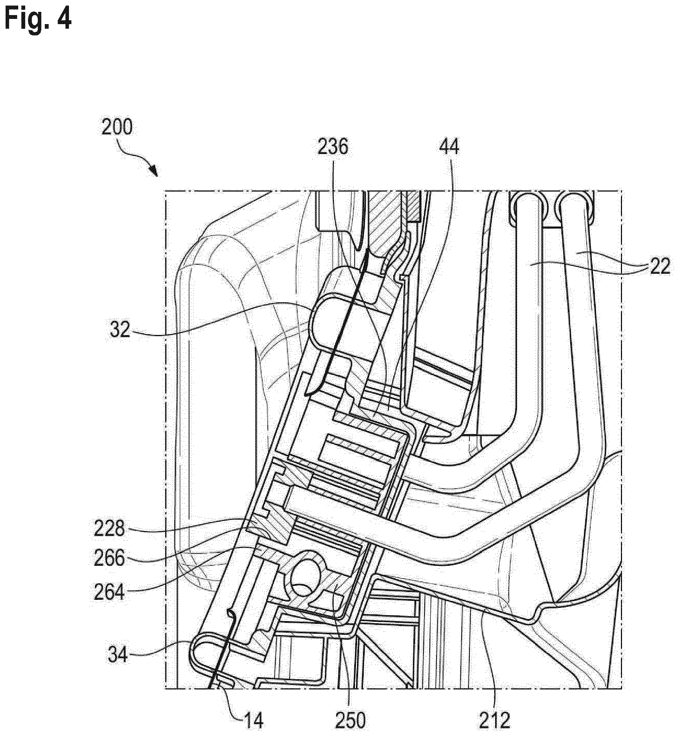

Figure 4 shows a further embodiment of an assembly 200.

In contrast to the embodiment just described, the rigid intermediate body 250 here is arranged radially between the fluid lines 22 and the circumferential wall portion 236 of the elastic sealing element 230 of the seal 220 while the circumferential wall portion 236 lies between the rigid intermediate body 250 and the housing 212. As in the previous embodiments, the dimensions of the components are also selected in such a manner that the intermediate body 250 and the elastic sealing element 230 of the seal 220 are clamped with the desired force in the opening 38 in the housing 212.

The seal 220 is illustrated in its relaxed state, but in the fitted position, in Figure 4. In the actual fitted state, the sealing lip 34 of the end wall portion 32 would bear against that side of the end wall 14 which is on the right in the figure. The seal 220 is mounted on the fluid lines 22 before the latter are connected to the flange 28 or to a heat exchanger of the vehicle air-conditioning system.

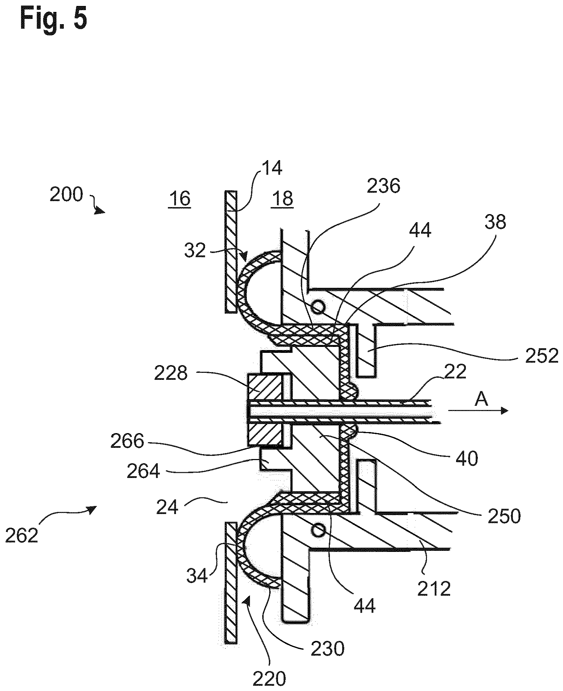

Figure 5 shows the assembly 200 in a schematic sectional view.

The feed-through portion 240 is arranged here on that side of the circumferential wall portion 236 of the seal 220 which faces away from the end wall 14 and bears with an encircling sealing lip directly against the fluid line 22 and not against the flange 228 thereof.

A cover portion 260 which, together with the circumferential wall portion 236, forms a cup-shaped receptacle for the rigid intermediate body 250 lies between the circumferential wall portion 236 and the feed-through portion 240.

A radially inwardly directed projection 252 on the housing 212 is oriented in such a manner that the seal 220 is placed in the axial direction A between the end wall 14 and the projection 252 and therefore cannot be displaced in the axial direction A.

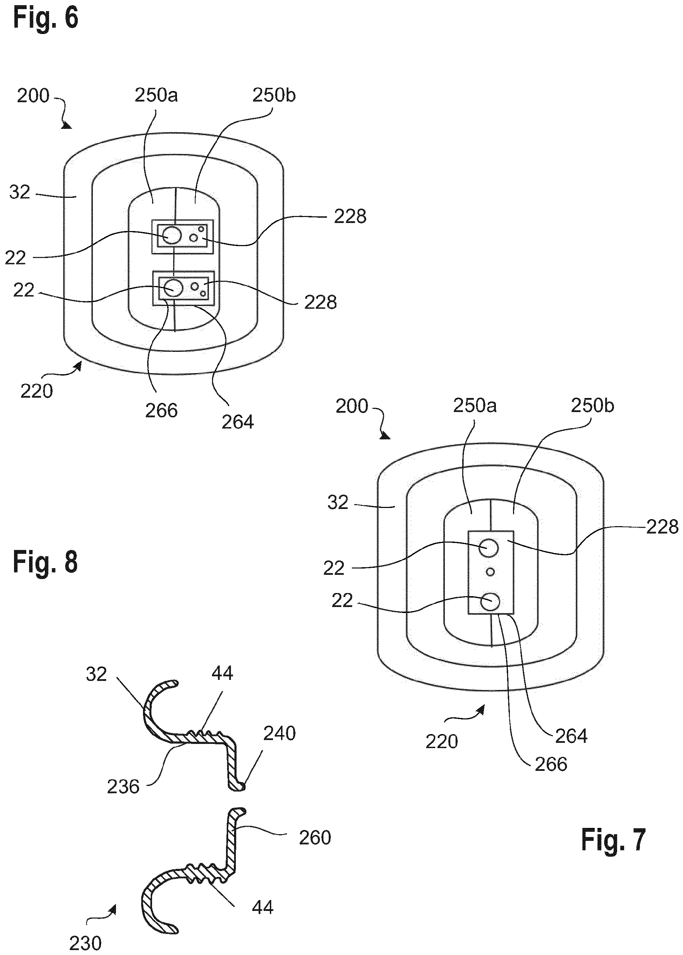

In this example, the ribs 44 for vibration decoupling are designed as radially inwardly directed longitudinal ribs which are distributed over the circumference of the circumferential wall portion 236. However, it would also be possible, as illustrated in the example of Figure 8, to use transverse ribs which are directed radially outwards, radially inwards or on both sides. It would likewise be possible to provide longitudinal ribs 44 which are directed radially outwards.

A means 262 for securing the flange 228 against rotation is formed between the intermediate body 250 and the flange 228 on the fluid line 22. The means for securing against rotation 262 comprises a seal-side structure 264 and a line-side structure 266 interacting with the latter.

In this example, the seal-side structure 264 has at least one stop point while the line-side structure 266 comprises at least one stop surface. In this example, the seal-side structure 264 is designed as a precisely fitting recess in the rigid intermediate body 250, into which recess the noncircular, here rectangular, outer circumference of the flange 228 is inserted in a form-fitting manner. A rotation in both directions of rotation is therefore only possible within the scope of the manufacturing tolerances, in particular with a maximum angle of rotation smaller than 0.1° to 3°. However, it would also be possible to form the stop points of the seal-side structure 264, for example, only from individual projections.

This shape of the means for securing against rotation 262 can be used both for flanges 228 with one or else with more than one fluid line 22 (see Figures 6 and 7).

The intermediate body 250 is divided along the plane defined by the two fluid lines 22 and is fitted together from two separate, half-shell-like parts 250a, 250b. Each of the parts 250a, 250b has half of a feed-through for the fluid line or fluid lines 22, and half of the seal-side structure 264 of the means for securing against rotation 262. This is shown by way of example in Figures 6 and 7 for two separate flanges 228 and, respectively, a combined flange 228 with two fluid lines 22.

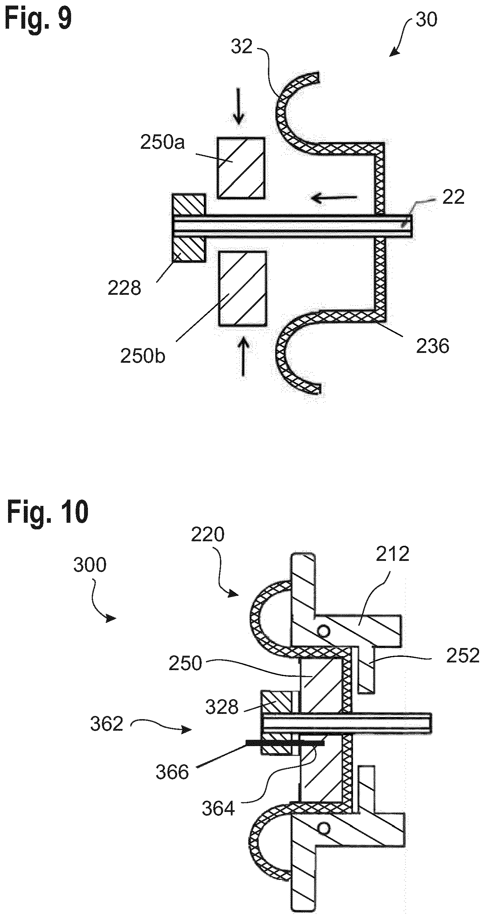

Figure 9 schematically illustrates how the elastic sealing element 230 of the seal 220, which sealing element is shown separately in Figure 8, is mounted around the fluid line 22. The parts 250a, 250b of the intermediate body 250 are fitted together around the fluid line 22 and the flange 228, and said assembly is then accommodated in the cup-shaped portion which is formed from the circumferential wall portion 236 and the cover portion 260 of the elastic sealing element 230 of the seal 220. Said assembly is then inserted into the opening 38 in the housing 212 of the vehicle air-conditioning-system module.

Owing to the means for securing against rotation 262, when the fluid lines 22 of the vehicle air-conditioning system are connected, the flange 228 cannot rotate in relation to the seal 220, and, during the tightening of the flange connections, torsional forces are introduced into the housing 212 and into the end wall 14.

Figure 10 shows an assembly 300 with an alternative form of the means for securing against rotation 362. Otherwise, the assembly 300 is substantially identical to the assembly 200 illustrated in Figure 5.

The means for securing against rotation 362 is formed here as a seal-side structure 364 by means of a blind hole in the rigid intermediate body 350, into which a fixing pin at the flange 328 on the fluid line 22 engages as the line-side structure 366. The fixing pin is formed on the flange 328 as an extension of a positioning pin and ensures correct installation of the fluid line 22 and is provided as standard on the flanges of the fluid lines. The dimensions of the blind hole are coordinated with the fixing pin in such a manner that the latter is accommodated in the blind hole in a form-fitting manner apart from manufacturing tolerances, and therefore the maximum angle of rotation can also be selected here to be smaller than 0.1° to 3°.

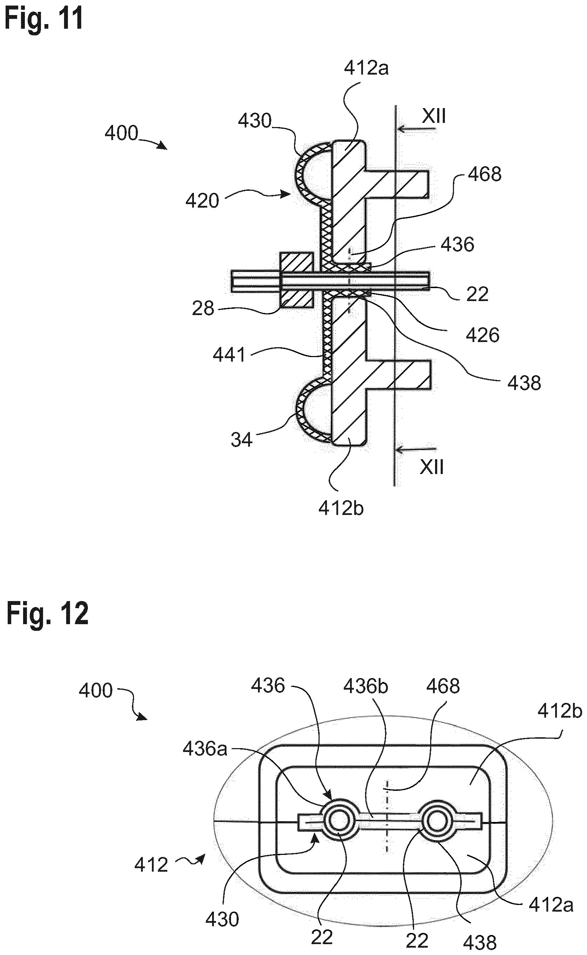

Figures 11 and 12 show a fifth embodiment of an assembly 400, with a seal 420 which is inserted into a housing 412.

In this case, the opening 38 in the housing 412 is designed as an elongated slot. Two fluid lines 22 which lie parallel to each other but are spaced apart from each other run through said opening 38. In the region of the fluid lines 22, the distance between the edges of the opening 38 is in each case increased to an extent such that individual receptacles for the fluid lines 22 are formed.

The two fluid lines 22 can have a common flange 28 or else two separate flanges 28.

The elastic sealing element 430 of the seal 420 has a feed-through portion 426 in which the circumferential wall portion 436 which surrounds the fluid lines 22 and lies between the latter and the inner wall of the opening 38 in the housing 412 is integrated.

The opening in the feed-through portion 426 is matched to the opening 38 and therefore the elastic sealing element 430 is designed with a slot over the entire length of the opening 38.

The circumferential wall portion 436 surrounds each of the fluid lines 22 in a portion 436a and otherwise runs over the remaining length of the opening 38 in a portion 436b in a sealing lip protruding vertically from the wall 441 of the elastic sealing element 34. On the far side of the fluid lines 22, the two sealing lips of the portion 436b run parallel to each other and completely bear against each other and therefore completely seal off the slot in the elastic sealing element 430.

During the installation, because of the wide opening in the feed-through portion 426, the elastic sealing element 430 can simply be pulled over the flange or the flanges 28.

In this example, in order to be able to insert the circumferential wall portion 436 of the seal 420 into the opening 38 in the housing 412, the housing 412 is of two-part design. The dividing plane lies along the opening 38 (see Figure 12), and each of the housing parts 412a, 412b has half of the inner wall of the opening 38. In this manner, after the elastic sealing element 430 has been pulled onto the fluid lines 22, the housing 412 can simply be pushed together such that the housing halves 412a, 412b surround the circumferential wall 436.

In order to hold together the elastic sealing element 430 in a liquid tight manner in the portion 436b between the two fluid lines 22, a fastening 468 is provided in this region, said fastening fixing the two housing halves 412a, 412b on each other such that they exert a clamping effect on the portions 436b. The fastening 468 may be designed, for example, as a screw connection or as a clip connection between the housing halves 412a, 412b, which is closed after or when the two housing halves 412a, 412b are fitted together.

## Claims

1. Vehicle air-conditioning-system-module seal which is arranged on an opening (24) in an end wall (14) between an engine compartment (16) of the vehicle and the vehicle interior (18), wherein the vehicle air-conditioning-system-module seal (20; 120; 220) has at least one feed-through for a fluid line (22) and an elastic sealing element (30) with a circumferential wall portion (36; 136; 236), which is designed in such a manner that it can be arranged between the fluid line (22) and a housing (12; 112; 212) of the vehicle air-conditioning-system module, and with a flange-like end wall portion (32) which encircles annularly around the circumferential wall portion (36; 136; 236) and is designed in such a manner that it can bear against the end wall (14) and can seal off the housing (12; 112; 212) in relation to the opening (24) in the end wall (14), **characterised in that** the seal comprises an intermediate body (150) which, in the mounted state, is arranged between the fluid line (22) and the housing (112; 212) being provided, this intermediate body (150) being arranged radially outside the circumferential wall portion (136).

2. Vehicle air-conditioning-system-module seal according to Claim 1, **characterized in that** the elastic sealing element (30) is formed in one piece.

3. Vehicle air-conditioning-system-module seal according to either of the preceding claims, **characterized in that** the circumferential wall portion (36; 136; 236) has ribs (44) protruding on the inside and/or outside.

4. Vehicle air-conditioning-system-module seal according to one of the preceding claims, **characterized in that** the elastic sealing element (30) has a feed-through portion (40) with at least one feed-through opening (26) for the fluid line (22), which feed-through portion, in the mounted state, bears against the fluid line in order to seal off the feed-through opening (26).

5. Vehicle air-conditioning-system-module seal according to one of the preceding claims, **characterized in that** the intermediate body (150) is a component composed of a rigid material.

6. Vehicle air-conditioning-system-module seal according to one of the preceding claims, **characterized in that** the intermediate body (150) has a feed-through for the fluid line (22), wherein the intermediate body (150) comprises two half-shell-like parts (250a, 250b) which can be fitted together around the fluid line (22) such that they engage around the fluid line (22).

7. Assembly with a vehicle air-conditioning-system-module seal (20; 120; 220), according to one of the preceding claims, with a housing (12; 112; 212) of a vehicle air-conditioning-system module, which housing is arranged on an opening (24) in an end wall (14) between an engine compartment (16) of the vehicle and the vehicle interior (18), and with a fluid line (22) passing through the vehicle air-conditioning-system-module seal (20; 120; 220), wherein the vehicle air-conditioning-system-module seal (20; 120; 220) has an elastic sealing element (30) which has an end wall portion (32), which bears against the end wall (14), and a circumferential wall portion (36; 136; 236), which is arranged between the fluid line (22) and the housing (12; 112; 212), and at least one feed-through opening (26) for the fluid line (22), wherein the end wall portion (32) and the circumferential wall portion (36; 136; 236) seal off the housing (12; 112; 212) of the vehicle air-conditioning-system module in relation to the opening (24) in the end wall (14), an intermediate body (150; 250) which, in the mounted state, is arranged between the fluid line (22) and the housing (12; 112; 212) being provided, this intermediate body (150) being arranged radially outside the circumferential wall portion (36; 136; 236), and the end wall portion (32) brings about vibration decoupling between the housing (12; 112; 212) and the end wall (14), and the circumferential wall portion (36; 136; 236) brings about vibration decoupling between the housing (12; 112; 212) and the fluid line (22) .

8. Assembly according to Claim 7, **characterized in that** an intermediate body (150) which has a means for securing against rotation (262; 362) for the fluid line (22) is provided in the vehicle air-conditioning-system-module seal, wherein a seal-side structure (264; 364) is provided which interacts with a line-side structure (266; 366) in order to limit a rotation of the fluid line (22) in relation to the vehicle air-conditioning-system-module seal (120; 220).

9. Assembly according to Claim 8, **characterized in that** the seal-side structure (264) comprises at least one stop point and the line-side structure (266) comprises at least one stop surface which comes into contact with the stop point at least when the fluid line (22) rotates in relation to the vehicle air-conditioning-system-module seal (220).

10. Assembly according to Claim 8, **characterized in that** the seal-side structure (364) comprises a blind hole and the line-side structure (366) comprises a fixing pin which engages in the blind hole.

11. Assembly according to Claim 7, **characterized in that** the feed-through opening (426) in the elastic sealing element (430) is of slot-shaped design and is surrounded by a circumferential wall portion (436) which has first portions (436a) which run in the region of the fluid lines (22) and second portions (436b) which lie opposite one another and bear against one another.

12. Assembly according to one of Claims 7 to 11, **characterized in that** the housing (412) is of multi-part design.

13. Assembly according to Claims 11 and 12, **characterized in that** the housing (412) is in two parts, and the two housing halves (412a, 412b) are fixed to each other in the region of the second portions (436b) of the circumferential wall portion (436) and exert a clamping force on the circumferential wall portion (436).

## Patentansprüche

1. Fahrzeugklimaanlagenmoduldichtung, die an einer Öffnung (24) in einer Stirnwand (14) zwischen einem Motorraum (16) des Fahrzeugs und dem Fahrzeuginnenraum (18) angeordnet ist, wobei die Fahrzeugklimaanlagenmoduldichtung (20; 120; 220) mindestens eine Durchführung für eine Fluidleitung (22) und ein elastisches Dichtelement (30) mit einem Umfangswandabschnitt (36; 136; 236), der derart gestaltet ist, dass er zwischen der Fluidleitung (22) und einem Gehäuse (12; 112; 212) des Fahrzeugklimaanlagenmoduls angeordnet werden kann, und mit einem ringförmig um den Umfangswandabschnitt (36; 136; 236) umlaufenden, flanschartigen Stirnwandabschnitt (32), der derart ausgestaltet ist, dass er an der Stirnwand (14) anliegen kann und das Gehäuse (12; 112; 212) gegenüber der Öffnung (24) in der Stirnwand (14) abdichten kann, aufweist, **dadurch gekennzeichnet, dass** die Dichtung einen Zwischenkörper (150) umfasst, der im montierten Zustand zwischen der Fluidleitung (22) und dem Gehäuse (112; 212) angeordnet ist, bereitgestellt wird, wobei der Zwischenkörper (150) radial außerhalb des Umfangswandabschnitts (136) angeordnet ist.

2. Fahrzeugklimaanlagenmoduldichtung nach Anspruch 1, **dadurch gekennzeichnet, dass** das elastische Dichtelement (30) einstückig ausgebildet ist.

3. Fahrzeugklimaanlagenmoduldichtung nach einem der vorstehenden Ansprüche, **dadurch gekennzeichnet, dass** der Umfangswandabschnitt (36; 136; 236) Rippen (44) aufweist, die auf der Innenseite und/oder Außenseite vorstehen.

4. Fahrzeugklimaanlagenmoduldichtung nach einem der vorstehenden Ansprüche, **dadurch gekennzeichnet, dass** das elastische Dichtelement (30) einen Durchführungsabschnitt (40) mit mindestens einer Durchführungsöffnung (26) für die Fluidleitung (22) aufweist, wobei der Durchführungsabschnitt im montierten Zustand an der Fluidleitung anliegt, um die Durchführungsöffnung (26) abzudichten.

5. Fahrzeugklimaanlagenmoduldichtung nach einem der vorstehenden Ansprüche, **dadurch gekennzeichnet, dass** der Zwischenkörper (150) eine Komponente ist, die aus einem steifen Material besteht.

6. Fahrzeugklimaanlagenmoduldichtung nach einem der vorstehenden Ansprüche, **dadurch gekennzeichnet, dass** der Zwischenkörper (150) eine Durchführung für die Fluidleitung (22) aufweist, wobei der Zwischenkörper (150) zwei halbschalenförmige Teile (250a, 250b) umfasst, die derart um die Fluidleitung (22) aneinander montiert werden können, dass sie um die Fluidleitung (22) greifen.

7. Anordnung mit einer Fahrzeugklimaanlagenmoduldichtung (20; 120; 220) nach einem der vorstehenden Ansprüche mit einem Gehäuse (12; 112; 212) eines Fahrzeugklimaanlagenmoduls, wobei das Gehäuse an einer Öffnung (24) in einer Stirnwand (14) zwischen einem Motorraum (16) des Fahrzeugs und dem Fahrzeuginnenraum (18) angeordnet ist und wobei eine Fluidleitung (22) durch die Fahrzeugklimaanlagenmoduldichtung (20; 120; 220) verläuft, wobei die Fahrzeugklimaanlagenmoduldichtung (20; 120; 220) ein elastisches Dichtelement (30) umfasst, das einen Stirnwandabschnitt (32), der an der Stirnwand (14) anliegt, und einen Umfangswandabschnitt (36; 136; 236), der zwischen der Fluidleitung (22) und dem Gehäuse (12; 112; 212) angeordnet ist, und mindestens eine Durchführungsöffnung (26) für die Fluidleitung (22) aufweist, wobei der Stirnwandabschnitt (32) und der Umfangswandabschnitt (36; 136; 236) das Gehäuse (12; 112; 212) des Fahrzeugklimaanlagenmoduls gegenüber der Öffnung (24) in der Stirnwand (14) abdichten, einen Zwischenkörper (150; 250), der im montierten Zustand zwischen der Fluidleitung (22) und dem Gehäuse (12; 112; 212) angeordnet ist, wobei der Zwischenkörper (150) radial außerhalb des Umfangswandabschnitts (36; 136; 236) angeordnet ist und wobei der Stirnwandabschnitt (32) eine Schwingungsentkopplung zwischen dem Gehäuse (12; 112; 212) und der Stirnwand (14) bewirkt und der Umfangswandabschnitt (36; 136; 236) eine Schwingungsentkopplung zwischen dem Gehäuse (12; 112; 212) und der Fluidleitung (22) bewirkt.

8. Anordnung nach Anspruch 7, **dadurch gekennzeichnet, dass** ein Zwischenkörper (150), der eine Verdrehsicherungseinrichtung (262; 362) für die Fluidleitung (22) aufweist, in der Fahrzeugklimaanlagenmoduldichtung vorgesehen ist, wobei eine dichtungsseitige Struktur (264; 364) vorgesehen ist, die mit einer leitungsseitigen Struktur (266; 366) zusammenwirkt, um die Drehung der Fluidleitung (22) gegenüber der Fahrzeugklimaanlagenmoduldichtung (120; 220) einzuschränken.

9. Anordnung nach Anspruch 8, **dadurch gekennzeichnet, dass** die dichtungsseitige Struktur (264) mindestens einen Anschlagpunkt umfasst und die leitungsseitige Struktur (266) mindestens eine Anschlagfläche umfasst, die zumindest, wenn sich die Fluidleitung (22) gegenüber der Fahrzeugklimaanlagenmoduldichtung (220) dreht, mit dem Anschlagpunkt in Kontakt kommt.

10. Anordnung nach Anspruch 8, **dadurch gekennzeichnet, dass** die dichtungsseitige Struktur (364) ein Blindloch umfasst und die leitungsseitige Struktur (366) einen Fixierstift umfasst, der in das Blindloch eingreift.

11. Anordnung nach Anspruch 7, **dadurch gekennzeichnet, dass** die Durchführungsöffnung (426) im elastischen Dichtelement (430) schlitzförmig ausgestaltet ist und von einem Umfangswandabschnitt (436) umgeben ist, der erste Abschnitte (436a), die im Bereich der Fluidleitungen (22) verlaufen, und zweite Abschnitte (436b), die einander entgegengesetzt sind und aneinander anliegen, aufweist.

12. Anordnung nach einem der Ansprüche 7 bis 11, **dadurch gekennzeichnet, dass** das Gehäuse (412) mehrteilig ausgestaltet ist.

13. Anordnung nach Anspruch 11 und 12, **dadurch gekennzeichnet, dass** das Gehäuse (412) zweiteilig ist und die zwei Gehäusehälften (412a, 412b) im Bereich der zweiten Abschnitte (436b) des Umfangswandabschnitts (436) aneinander befestigt sind und eine Einspannkraft auf den Umfangswandabschnitt (436) aufbringen.

## Revendications

1. Joint d'étanchéité de module de système de climatisation de véhicule qui est agencé sur une ouverture (24) dans une paroi d'extrémité (14) entre un compartiment moteur (16) du véhicule et l'intérieur du véhicule (18), le joint d'étanchéité de module de système de climatisation de véhicule (20 ; 120 ; 220) comprenant au moins un passage pour une conduite de fluide (22) et un élément d'étanchéité élastique (30) muni d'une portion de paroi circonférentielle (36 ; 136 ; 236), qui est conçue de manière à pouvoir être agencée entre la conduite de fluide (22) et un boîtier (12 ; 112 ; 212) du module de système de climatisation de véhicule, et muni d'une portion de paroi d'extrémité de type bride de fixation (32) qui encercle annulairement la portion de paroi circonférentielle (36 ; 136 ; 236) et est conçue de manière à pouvoir être en appui contre la paroi d'extrémité (14) et à pouvoir étanchéifier le boîtier (12 ; 112 ; 212) par rapport à l'ouverture (24) dans la paroi d'extrémité (14), **caractérisé en ce que** le joint d'étanchéité comprend un corps intermédiaire (150) qui, à l'état monté, est agencé entre la conduite de fluide (22) et le boîtier (112 ; 212) étant prévu, ce corps intermédiaire (150) étant agencé radialement à l'extérieur de la portion de paroi circonférentielle (136) .

2. Joint d'étanchéité de module de système de climatisation de véhicule selon la revendication 1, **caractérisé en ce que** l'élément d'étanchéité élastique (30) est formé en une pièce.

3. Joint d'étanchéité de module de système de climatisation de véhicule selon l'une quelconque des revendications précédentes, **caractérisé en ce que** la portion de paroi circonférentielle (36 ; 136 ; 236) comprend des nervures (44) dépassant sur l'intérieur et/ou l'extérieur.

4. Joint d'étanchéité de module de système de climatisation de véhicule selon l'une quelconque des revendications précédentes, **caractérisé en ce que** l'élément d'étanchéité élastique (30) comprend une portion de passage (40) munie d'au moins une ouverture de passage (26) pour la conduite de fluide (22), laquelle portion de passage, à l'état monté, est en appui contre la conduite de fluide afin d'étanchéifier l'ouverture de passage (26).

5. Joint d'étanchéité de module de système de climatisation de véhicule selon l'une quelconque des revendications précédentes, **caractérisé en ce que** le corps intermédiaire (150) est un composant composé d'un matériau rigide.

6. Joint d'étanchéité de module de système de climatisation de véhicule selon l'une quelconque des revendications précédentes, **caractérisé en ce que** le corps intermédiaire (150) comprend un passage pour la conduite de fluide (22), le corps intermédiaire (150) comprenant deux parties de type demi-coque (250a, 250b) qui peuvent être assemblées autour de la conduite de fluide (22) de telle sorte qu'elles entrent en prise autour de la conduite de fluide (22).

7. Ensemble muni d'un joint d'étanchéité de module de système de climatisation de véhicule (20 ; 120 ; 220) selon l'une quelconque des revendications précédentes, muni d'un boîtier (12 ; 112 ; 212) d'un module de système de climatisation de véhicule, lequel boîtier est agencé sur une ouverture (24) dans une paroi d'extrémité (14) entre un compartiment moteur (16) du véhicule et l'intérieur du véhicule (18), et muni d'une conduite de fluide (22) traversant le joint d'étanchéité de module de système de climatisation de véhicule (20 ; 120 ; 220), le joint d'étanchéité de module de système de climatisation de véhicule (20 ; 120 ; 220) comprenant un élément d'étanchéité élastique (30) qui comprend une portion de paroi d'extrémité (32), qui est en appui contre la paroi d'extrémité (14), et une portion de paroi circonférentielle (36 ; 136 ; 236) qui est agencée entre la conduite de fluide (22) et le boîtier (12 ; 112 ; 212), et au moins une ouverture de passage (26) pour la conduite de fluide (22), la portion de paroi d'extrémité (32) et la portion de paroi circonférentielle (36 ; 136 ; 236) étanchéifiant le boîtier (12 ; 112 ; 212) du module de système de climatisation de véhicule par rapport à l'ouverture (24) dans la paroi d'extrémité (14), un corps intermédiaire (150 ; 250) qui, à l'état monté, est agencé entre la conduite de fluide (22) et le boîtier (12 ; 112 ; 212) étant prévu, ce corps intermédiaire (150) étant agencé radialement à l'extérieur de la portion de paroi circonférentielle (36 ; 136 ; 236), et la portion de paroi d'extrémité (32) réalisant un découplage de vibration entre le boîtier (12 ; 112 ; 212) et la paroi d'extrémité (14), et la portion de paroi circonférentielle (36 ; 136 ; 236) réalisant un découplage de vibration entre le boîtier (12 ; 112 ; 212) et la conduite de fluide (22).

8. Ensemble selon la revendication 7, **caractérisé en ce qu'**un corps intermédiaire (150) qui comprend un moyen d'immobilisation en rotation (262 ; 362) pour la conduite de fluide (22) est prévu dans le joint d'étanchéité de module de système de climatisation de véhicule, une structure côté joint d'étanchéité (264 ; 364) étant prévue, qui interagit avec une structure côté ligne (266 ; 366) afin de limiter une rotation de la conduite de fluide (22) par rapport au joint d'étanchéité de module de système de climatisation de véhicule (120 ; 220).

9. Ensemble selon la revendication 8, **caractérisé en ce que** la structure côté joint d'étanchéité (264) comprend au moins un point d'arrêt et la structure côté conduite (266) comprend au moins une surface d'arrêt qui vient en contact avec le point d'arrêt au moins lorsque la conduite de fluide (22) tourne par rapport au joint d'étanchéité de module de système de climatisation de véhicule (220).

10. Ensemble selon la revendication 8, **caractérisé en ce que** la structure côté joint d'étanchéité (364) comprend un trou borgne et la structure côté conduite (366) comprend une goupille de fixation qui entre en prise dans le trou borgne.

11. Ensemble selon la revendication 7, **caractérisé en ce que** l'ouverture de passage (426) dans l'élément d'étanchéité élastique (430) est conçue en forme de fente et est entourée par une portion de paroi circonférentielle (436) qui comprend des premières portions (436a) qui s'étendent dans la région des conduites de fluide (22) et des deuxièmes portions (436b) qui se situent à l'opposé les unes des autres et sont en appui les unes contre les autres.

12. Ensemble selon l'une quelconque des revendications 7 à 11, **caractérisé en ce que** le boîtier (412) est conçu à plusieurs parties.

13. Ensemble selon les revendications 11 et 12, **caractérisé en ce que** le boîtier (412) est en deux parties, et les deux moitiés de boîtier (412a, 412b) sont fixées l'une à l'autre dans la région des deuxièmes portions (436b) de la portion de paroi circonférentielle (436) et exercent une force de serrage sur la portion de paroi circonférentielle (436) .
